# EUROPÄISCHE PATENTSCHRIFT

(11) **EP 0 691 251 B1**
(45) Veröffentlichungstag und Bekanntmachung des Hinweises auf die Patenterteilung: **16.05.2001**
(21) Anmeldenummer: 95110185.6
(22) Anmeldetag: 29.06.1995
(51) Int. Cl.: B60T 11/224

(54) **Hauptbremszylinder mit Füllstufe**
Master brake cylinder with fast-fill chamber
Maître-cylindre de freinage ayant une chambre de remplissage rapide

(30) Priorität: 05.07.1994 DE 4423562
(43) Veröffentlichungstag der Anmeldung: 10.01.1996
(73) Patentinhaber: Lucas Industries Limited, London W1Y 4DJ (GB)
(72) Erfinder: Kaub, Manfred, D-56321 Rhens (DE); Lange, Hans-Christoph, D-56218 Mülheim/Kärlich (DE); Schlüter, Peter, D-56206 Kammerforst (DE)
(74) Vertreter: Beyer, Andreas, Dr.

(56) Entgegenhaltungen:
- DE-A- 3 405 392
- US-A- 1 919 465
- US-A- 2 804 750

## Beschreibung

Die Erfindung betrifft einen Hauptbremszylinder für eine hydraulische Bremsanlage, mit einem sich im wesentlichen längs einer Achse erstreckenden Gehäuse, das zumindest eine darin ausgebildete Druckkammer hat, welche an der Betätigungsseite des Hauptbremszylinders eine Öffnung aufweist, und einer Füllstufe, die einen koaxial zu der Achse geführten, die Druckkammer abdichtenden Füllkolben und eine Füllkammer aufweist und die in der Anfangsphase einer Betätigung des Hauptbremszylinders die Bremsanlage bei relativ kurzem Betätigungsweg schnell mit Hydraulikflüssigkeit auffüllt, wobei der Füllkolben und die Füllkammer durch ein tassenförmiges Bauteil gebildet sind.

Ein Hauptbremszylinder ist aus der DE 34 05 392 A1 bekannt. Bei dem dort offenbarten Hauptbremszylinder ist die Füllstufe aus einem am betätigungsseitigen Ende des Hauptbremszylinders angeordneten Verschlußglied gebildet, das im wesentlichen aus einer Hülse, die einen gegenüber der Bohrung des Hauptbremszylinders vergrößerten Durchmesser aufweist, und einem in der Hülse teleskopisch geführten Kolben besteht. Die Hülse, durch die das Hauptvolumen der Füllkammer begrenzt wird, ist starr auf dem betätigungsseitigen Ende des Hauptbremszylindergehäuses befestigt.

Hauptbremszylinder mit einer Füllstufe sind in der Lage, das sogenannte Bremslüftspiel, d.h. den Leerweg, der beim Betätigen einer Fahrzeug-Bremsanlage überwunden werden muß bis sich die Bremsklötze an die entsprechende Bremsscheibe oder -trommel anlegen, schneller zu überwinden als Hauptbremszylinder ohne Füllstufe, da die Füllstufe dafür sorgt, daß in der Anfangsphase der Bremsbetätigung relativ viel Hydraulikflüssigkeit in die Bremsanlage gelangt. Sobald die Hydraulikflüssigkeit in der Druckkammer einen bestimmten Druck erreicht hat, wird die Füllstufe außer Funktion gesetzt. Bei einer weiteren Betätigung der Bremsanlage, beispielsweise bei einem weiteren Durchdrücken eines Bremspedals, wird in der Bremsanlage kaum noch Hydraulikflüssigkeit bewegt, sondern der Betätigungsdruck wird in bekannter Weise hydraulisch in Bremsdruck umgesetzt.

Zur Steuerung der Füllstufe eines Hauptbremszylinders wird herkömmlicherweise zumindest ein druckabhängig gesteuertes, relativ aufwendiges Ventil im Hauptbremszylinder benötigt. Desweiteren sind herkömmliche Hauptbremszylinder mit Füllstufen aufwendig zu fertigen und haben zudem relativ große Abmessungen.

Im Rahmen der ständigen Bestrebungen nach verbrauchsärmeren Fahrzeugen wird nun gefordert, das Bremslüftspiel so weit zu vergrößern, daß die Bremsklötze bei unbetätigter Bremsanlage nicht mehr an den ihnen zugeordneten Bremsscheiben oder-trommeln schleifen. Auf diese Weise lassen sich unerwünschte Fahrtwiderstände eliminieren. Bisher war es üblich, die Bremsklötze insbesondere bei Scheibenbremsen auch in unbetätigtem Zustand sehr dicht an der Scheibe zu führen. Ein dabei auftretender geringer Schleifkontakt zwischen Bremsklötzen und Bremsscheibe war sogar erwünscht, denn er sorgte in vorteilhafter Weise dafür, daß Fahrzeug-Scheibenbremsen auch bei Regenfahrten schnell ansprachen. Eine Vergrößerung des Bremslüftspiels, d.h. des Abstands von Bremsklötzen zur Bremsscheibe oder Bremstrommel bedeutet nun, daß vermehrt Hauptbremszylinder mit Füllstufen eingesetzt werden müssen, und zwar auch in Klein- und Mittelklassewagen.

Aus der US-A-1 919 465 ist ein Hauptbremszylinder für eine hydraulische Bremsanlage bekannt. Der Hauptbremszylinder umfasst eine Füllstufe, welche einen eine Druckkammer abdichtenden Füllkolben sowie eine Füllkammer aufweist. Der Füllkolben und die Füllkammer werden durch ein tassenförmiges Bauteil gebildet, welches innerhalb eines Gehäuses des Hauptbremszylinders geführt ist.

Der Erfindung liegt daher die Aufgabe zugrunde, einen Hauptbremszylinder mit einer Füllstufe für eine hydraulische Bremsanlage bereitzustellen, der weniger Bauraum beansprucht, billiger zu fertigen ist und bei dem die Zu- und Abschaltung der Füllstufe konstruktiv einfacher gelöst werden kann.

Erfindungsgemäß ist diese Aufgabe dadurch gelöst, daß der Füllkolben und die Füllkammer durch ein tassenförmiges Bauteil gebildet sind, welches auf dem betätigungsseitigen Ende des Hauptbremszylindergehäuses teleskopisch geführt ist und während der Betätigung des Hauptbremszylinders durch ein federnd nachgiebiges Element in Druckaufbaurichtung verschoben wird. Die Abdichtung der Druckkammer kann auf dem Hauptbremszylindergehäuse außen erfolgen, also zwischen dem tassenförmigen Bauteil und der Gehäuseaußenwand, oder auch zwischen der Druckkammerinnenwand und dem tassenförmigen Bauteil.

Erfindungsgemäß kann demnach das Hauptbremszylindergehäuse eines herkömmlichen Hauptbremszylinders ohne Füllstufe im wesentlichen übernommen werden. Es ist insbesondere nicht erforderlich, das Hauptbremszylindergehäuse stufenförmig auszuführen. Das erfindungsgemäß vorgesehene tassenförmige Bauteil vermindert nicht nur den Fertigungsaufwand ganz erheblich, es sorgt außerdem dafür, daß ein erfindungsgemäßer Hauptbremszylinder kompakter gehalten werden kann.

Vorzugsweise steht das tassenförmige Bauteil in mechanischer Verbindung mit einem Druckkolben des Hauptbremszylinders, insbesondere mit einem auch Eingangskolben genannten ersten Druckkolben. Alternativ ist es auch möglich, statt einer mechanischen Verbindung zwischen dem tassenförmigen Bauteil und dem genannten Druckkolben lediglich eine reine Fluidverbindung über die im Hauptbremszylinder enthaltene Hydraulikflüssigkeit vorzusehen.

In einer Ausführungsform des erfindungsgemäßen Hauptbremszylinders wird die Funktion der Füllstufe betätigungswegabhängig gesteuert. Durch diese Maßnahme kann die bisher übliche aufwendige druckabhängige Steuerung der Füllstufe entfallen. Bevorzugt erfolgt die betätigungswegabhängige Steuerung der Füllstufe durch einen sich in Umfangsrichtung in der Druckkammer des Hauptbremszylinders erstreckenden Steuernocken, der während einer Betätigung des Hauptbremszylinders mit einer ebenfalls in der Druckkammer angeordneten und sich in Umfangsrichtung erstreckenden Steuerdichtung derart zusammenwirkt, daß die Füllstufe bei Erreichen eines vorgegebenen Betätigungswegs außer Funktion gesetzt wird. Zusätzlich kann die Steuerdichtung so ausgelegt sein, daß sie bei Erreichen eines vorgegebenen Füllstufendrucks ihre dichtende Wirkung verliert. Auf diese Weise ist mit einfachen Mitteln sichergestellt, daß während einer Funktion der Füllstufe der von dieser erzeugte Druck nicht über einen vorgegebenen Wert ansteigt.

Bevorzugt ist die Steuerdichtung auf dem Druckkolben, d.h. dem Eingangskolben, angeordnet. Der Steuernocken ist dann an der Innenwand der im Hauptbremszylindergehäuse ausgebildeten Druckkammer angeordnet und kann auch integral mit der Druckkammerwand ausgebildet sein. Alternativ ist es ebenso möglich, die Steuerdichtung in der Innenwand der Druckkammer vorzusehen und den Steuernocken auf dem ersten Druckkolben auszubilden.

Das tassenförmige Bauteil wird erfindungsgemäß während einer Betätigung des Hauptbremszylinders durch ein federnd nachgiebiges Element in Druckaufbaurichtung verschoben. Das federnd nachgiebige Element ist insbesondere eine schraubenförmige Betätigungsfeder. Das federnd nachgiebige Element Kann in Druckaufbaurichtung starr mit dem ersten Druckkolben gekoppelt sein, so daß es bei einer Betätigung des ersten Druckkolbens und damit des Hauptbremszylinders zusammengedrückt wird und dadurch das tassenförmige Bauteil ebenfalls in Druckaufbaurichtung verschoben wird. Das federnd nachgiebige Element sorgt auch für eine Druckbegrenzung der Füllstufe, da bei Überschreiten eines vorgegebenen Drucks, der über die Federkraft des verwendeten federnd nachgiebigen Elements einstellbar ist, die Füllstufe automatisch außer Funktion gesetzt werden kann, indem die Federkraft des Elements dann nicht mehr ausreicht, das tassenförmige Bauteil weiter in Druckaufbaurichtung zu verschieben.

Um zu vermeiden, daß das Zu- und Abschalten der Füllstufe vom Benutzer der Bremsanlage bemerkt wird, beispielsweise also während einer Betätigung der Bremsanlage im Bremspedal eines Kraftfahrzeugs spürbar wird, kann vorgesehen werden, daß das tassenförmige Bauteil während seiner Verschiebung in Druckaufbaurichtung von dem ersten Druckkolben des Hauptbremszylinders entkoppelt ist. Das bedeutet, daß die Verschiebung des ersten Druckkolbens in Druckaufbaurichtung unabhängig von der Verschiebung des tassenförmigen Bauteils in Druckaufbaurichtung ist und daß ein Anhalten der Verschiebung des tassenförmigen Bauteils in Druckaufbaurichtung keine Rückwirkung auf den ersten Druckkolben und ein diesen betätigendes Organ hat. Die mechanische Verbindung zwischen dem ersten Druckkolben und dem tassenförmigen Bauteil besteht bei solchen Ausführungsformen nur noch darin, daß die beiden genannten Teile beispielsweise konzentrisch ineinander geführt sind.

Das federnd nachgiebige Element ist bevorzugt radial außerhalb des tassenförmigen Bauteils angeordnet und von einem Käfig umfangen, gegen den sich ein Ende des federnd nachgiebigen Elements in Axialrichtung abstützt. Eine Rückwirkung auf ein den Hauptbremszylinder betätigendes Organ findet somit nicht statt. Vorteilhaft reicht der das federnd nachgiebige Element umschließende Käfig am betätigungsseitigen Ende des Hauptbremszylinders radial soweit nach innen, daß er nicht nur für eine Abstützung des federnd nachgiebigen Elements sorgt, sondern darüberhinaus auch einen Anschlag für das tassenförmige Bauteil bereitstellt, um dessen Axialverschiebung beim Rückhub zu begrenzen, insbesondere bei einer Druckbefüllung der Bremsanlage mit Hydraulikfluid.

Der das federnd nachgiebige Element umfangende Käfig kann auf dem betätigungsseitigen Ende des Hauptbremszylindergehäuses axial fixiert sein, beispielsweise durch Verstemmen des Käfigs in eine außen am Hauptbremszylindergehäuse ausgebildete, umlaufende Nut.

Gemäß einer anderen Ausführungsform ist der Käfig durch die Außenwand eines Bremskraftverstärkers gebildet. Ein separater Käfig ist bei dieser Lösung nicht erforderlich.

Gemäß einer weiteren Ausführungsform ist der Käfig nicht am Hauptbremszylindergehäuse axial fixiert, sondern lediglich auf das betätigungsseitige Ende des Hauptbremszylindergehäuses aufgeschoben. Bei dieser Ausführungsform weist der Käfig an seinem der Betätigungsseite entgegengesetzten Ende einen flanschförmigen Endabschnitt auf, der sich axial gegen das Gehäuse des Hauptbremszylinders abstützt, beispielsweise gegen den Verbindungsflansch eines zweiteilig ausgeführten Hauptbremszylindergehäuses.

Bei den Ausführungsformen des erfindungsgemäßen Hauptbremszylinders, bei denen ein federnd nachgiebiges Element den von der Füllstufe erzeugten Druck in vorgebbarer Weise begrenzt, kann die Steuerdichtung auch so ausgelegt werden, daß sie ihre dichtende Wirkung verliert, wenn in der Füllstufe ein vorgegebener Unterdruck erreicht wird. Auf diese Weise kann während des Rückhubs des tassenförmigen Bauteils Hydraulikfluid in die Füllkammer strömen, ohne daß ein separates Ventil vorgesehen werden muß.

Bei einer anderen Ausführungsform eines erfindungsgemäßen Hauptbremszylinders steuert die im Rahmen einer Betätigung desselben erfolgende Axialverschiebung des tassenförmigen Bauteils ein Plattenventil. Dieses Plattenventil schließt bei einer Axialverschiebung des tassenförmigen Bauteils in Druckaufbaurichtung eine Verbindung zwischen der Füllkammer und einem Vorratsbehälter für Hydraulikfluid.

Bei vielen Ausführungsformen des erfindungsgemäßen Hauptbremszylinders durchsetzt der mit dem tassenförmigen Bauteil mechanisch verbundene erste Druckkolben das tassenförmige Bauteil abdichtend und ist zudem axial verschieblich zu diesem angeordnet.

Das Gehäuse des Hauptbremszylinders ist der einfacheren Herstellbarkeit und Montage wegen bevorzugt quer geteilt ausgeführt, beispielsweise zweigeteilt. Auf diese Weise können fertigungstechnisch komplizierte Hinterschnitte weitgehend vermieden werden.

Mehrere Ausführungsbeispiele eines erfindungsgemäßen Hauptbremszylinders mit Füllstufe werden im folgenden anhand schematischer Zeichnungen näher erläutert. Es zeigt:
- Fig. 1: einen Längsschnitt durch ein das Verständnis der Erfindung erleichterndes erst Beispiel eines Hauptbremszylinders mit Füllstufe, bei der ein tassenförmiges Bauteil starr mit einem ersten Druckkolben verbunden ist,
- Fig. 2: die Anbindung der Füllstufe aus Fig. 1 an das Hauptbremszylindergehäuse in vergrößerter Darstellung,
- Fig. 3: einen Längsschnitt durch ein gegenüber dem ersten Beispiel etwas abgewandeltes zweites Beispiel zur Erleichteung des Verständnisses der Erfindung,
- Fig. 4: einen Längsschnitt durch eine erste erfindungsgemäße Ausführungsform, bei der das tassenförmige Bauteil durch ein federnd nachgiebiges Element betätigt wird,
- Fig. 5: die Anbindung der Füllstufe aus Fig. 4 an das Hauptbremszylindergehäuse in vergrößerter Darstellung,
- Fig. 6: einen Längsschnitt im Bereich der Füllstufe einer gegenüber der ersten Ausführungsform etwas abgewandelten zweiten Ausführungsform, bei der die Betätigung des tassenförmigen Bauteils von der Betätigung des ersten Druckkolbens entkoppelt ist,
- Fig. 7: einen Fig. 6 ähnlichen Längsschnitt einer weiter abgewandelten dritten Ausführungsform, bei der ein Käfig das federnd nachgiebige Element umfängt,
- Fig. 8: einen Fig. 7 ähnlichen Längsschnitt einer vierten Ausführungsform, bei der der Käfig durch die Außen-wand eines Bremskraftverstärkers gebildet ist,
- Fig. 9: einen Fig. 7 ähnlichen Längsschnitt einer fünften Ausführungsform, bei der der Käfig auf dem Hauptbremszylindergehäuse nicht axial fixiert ist, und
- Fig. 10: einen Längsschnitt durch eine sechste Ausführungsform, bei der die während einer Betätigung erfolgende Axialverschiebung des tassenförmigen Bauteils ein Plattenventil steuert.

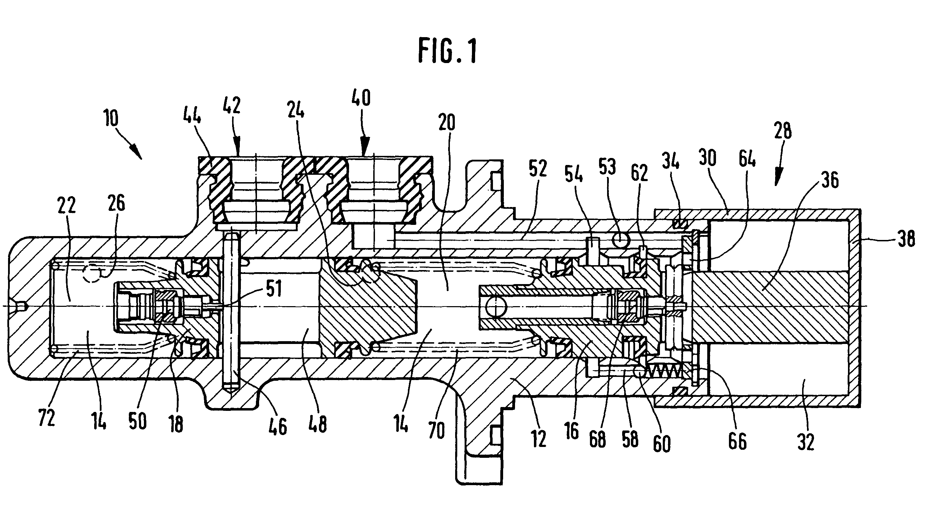

Anhand der Fig. 1 werden zunächst zur Erleichterung des Verständnisses der Erfindung der grundsätzliche Aufbau und die Funktion eines ersten Beispieles eines allgemein mit 10 bezeichneten Hauptbremszylinders beschrieben. Die weiteren Beispiele und erfindungsgemäßen Ausführungsformen werden dann nur noch in Bezug auf die zum ersten Beispiel vorhandenen Unterschiede erläutert.

Der in Fig. 1 dargestellte Hauptbremszylinder 10 hat ein sich im wesentlichen längs einer Achse A erstreckendes Gehäuse 12, in dem eine in Axialrichtung verlaufende Druckkammer 14 ausgebildet ist, die am in Fig. 1 rechten Ende des Gehäuses 12, welches im folgenden das betätigungsseitige Ende genannt wird, offen ist. In der Druckkamer 14 sind ein erster Druckkolben 16, der auch Eingangskolben genannt wird, sowie ein zweiter Druckkolben 18 axial verschiebbar angeordnet und mittels mehrerer herkömmlicher und daher nicht näher erläuterter Lippendichtungen gegenüber der Innenwand der Druckkammer 14 abgedichtet. Die beiden Druckkolben 16 und 18 unterteilen die Druckkammer 14 in zwei Teilkammern 20 und 22. Die erste Teilkammer 20 ist zwischen dem ersten Druckkolben 16 und dem zweiten Druckkolben 18 gebildet und weist einen Auslaß 24 auf, durch den ein erster Bremskreis einer Fahrzeug-Bremsanlage mit Druckfluid zur Bremsbetätigung versorgt wird. Die zweite Teilkammer 22 ist zwischen dem zweiten Druckkolben 18 und dem in Fig. 1 linken Ende der Druckkammer 14 gebildet. Sie weist einen Auslaß 26 auf, der mit einem zweiten Bremskreis der Fahrzeug-Bremsanlage verbunden ist. Der Hauptbremszylinder 10 ist somit an eine herkömmliche Zweikreis-Bremsanlage anschließbar.

Am betätigungsseitigen Ende des Hauptbremszylinders 10 befindet sich eine allgemein mit 28 bezeichnete Füllstufe. Die Füllstufe 28 weist ein tassenförmiges Bauteil 30 auf, das eine Füllkammer 32 umschließt und außen auf dem betätigungsseitigen Ende des Hauptbremszylindergehäuses 12 axial verschiebbar geführt ist. Bei einer Axialverschiebung des tassenförmigen Bauteils 30 bewegt sich dieses, wie aus Fig. 1 ersichtlich, teleskopisch auf dem betätigungsseitigen Ende des Hauptbremszylindegehäuses 12. Eine Ringdichtung, hier eine O-Ringdichtung 34, ist in einer nicht bezeichneten Ringnut auf der Außenseite des Gehäuses 12 des Hauptbremszylinders angeordnet und dichtet die Füllkammer 32 ab. Ein stabförmiger Fortsatz 36 des ersten Druckkolbens 16, der einen kleineren Durchmesser als der erste Druckkolben 16 aufweist, ragt aus dem offenen Ende der Druckkammer 14 heraus und ist mit einem Boden 38 des tassenförmigen Bauteils 30 in Betätigungsrichtung starr gekoppelt. Im gezeigten Beispiel ist der stabförmige Fortsatz 36 einstückig mit dem ersten Druckkolben 16 ausgeführt.

In betriebsfertigem Zustand des Hauptbremszylinders 10 sind sowohl die Teilkammern 20 und 22 als auch die Füllkammer 32 vollständig mit Hydraulikflüssigkeit gefüllt. Die Hydraulikflüssigkeit gelangt aus einem nicht gezeigten Vorrats- bzw. Ausgleichsbehälter durch zwei Öffnungen 40 und 42, in denen entsprechende Anschlußstutzen des nicht gezeigten Vorratsbehälters mit Hilfe eines elastischen Dichtelements 44 dichtend einrasten, in die Druckkammer 14 und von dort in die Füllkammer 32.

Genauer gesagt, gelangt die Hydraulikflüssigkeit durch die Öffnung 42 zunächst in eine längsgeschlitzte Hülse 46. Die Hülse 46, deren Enden in der Wand des Gehäuses 12 gehalten sind, erstreckt sich sowohl quer durch die Druckkammer 14 als auch durch den zweiten Druckkolben 18, der hierzu eine längliche Aussparung 48 aufweist, so daß seine axiale Verschiebbarkeit sichergestellt ist. Aus dem Raum, der von der länglichen Aussparung 48 und den entsprechenden Teilen der Druckkammerwandung begrenzt ist, kann die Hydraulikflüssigkeit dann durch ein im zweiten Druckkolben 18 angeordnetes, federnd in Schließstellung vorgespanntes Zentralventil 50 in die Teilkammer 22 gelangen, aus der durch den Auslaß 26 die Speisung des zweiten Bremskreises erfolgt.

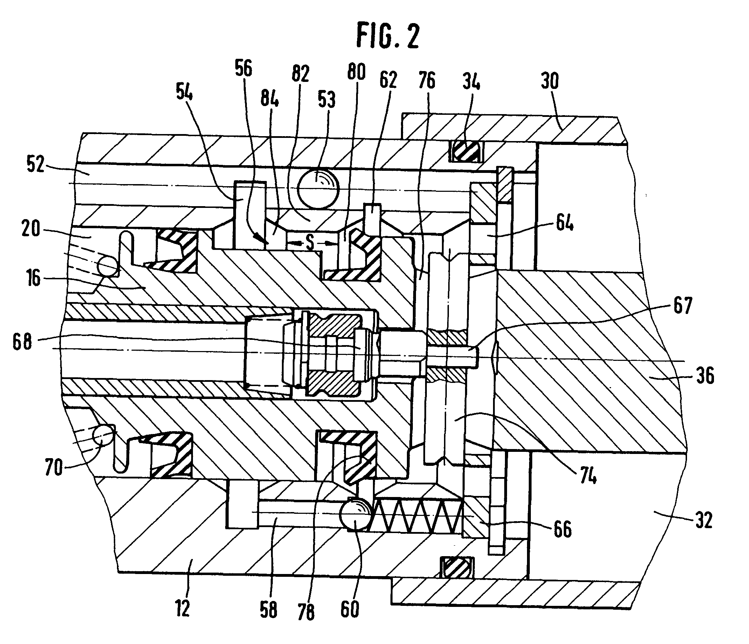

Durch die Öffnung 40 hingegen gelangt die Hydraulikflüssigkeit zunächst in eine zur Achse A parallele Verbindungsbohrung 52, deren betätigungsseitiges Ende mittels einer eingepreßten Dichtkugel 53 verschlossen ist, aus der sie durch einen in die Wandung der Druckkammer 14 eingestochenen Ringkanal 54, der die Verbindung zwischen der Verbindungsbohrung 52 und der Druckkammer 14 herstellt, in einen Ringraum 56 gelangt (s. insbesondere Fig.2), der um den ersten Druckkolben 16 zwischen zwei darauf mit axialem Abstand angeordneten Lippendichtungen gebildet ist. Die in Fig. 1 und 2 rechte Lippendichtung ist eine Steuerdichtung, auf deren Funktion später noch näher eingegangen wird. Eine weitere, jedoch kürzere achsparallele Verbindungsbohrung 58 mit einem darin angeordneten, federnd in Schließstellung vorgespannten Rückschlagventil 60 stellt über einen weiteren in die Wandung der Druckkammer 14 eingestochenen Ringkanal 62 zum einen durch Öffnungen 64 in einer Anschlagscheibe 66 eine Verbindung zur Füllkammer 32 und zum anderen über ein im ersten Druckkolben 16 angeordnetes, ebenfalls federnd in Schließstellung vorgespanntes zweites Zentralventil 68 eine Verbindung zur Teilkammer 20 her.

Im folgenden wird die Funktion des Hauptbremszylinders 10 und seiner Füllstufe 28 erläutert.

Die Figuren 1 und 2 zeigen den Hauptbremszylinder 10 in einer unbetätigten, d.h. kraftentlasteten Ausgangsstellung. Die beiden Druckkolben 16 und 18 sind durch je eine Rückstellfeder 70 bzw. 72 in ihre bezogen auf die Figuren rechte Endlage gedrückt. Das Zentralventil 68 im ersten Druckkolben 16 ist in dieser Ausgangsstellung durch einen Anschlagstift 74, der in einer Ausnehmung 76 des ersten Druckkolbens 16 angeordnet und mit dem Ventilkörper des Zentralventils 68 durch einen stiftförmigen Fortsatz 67 desselben verbunden ist, geöffnet gehalten, indem der Anschlagstift 74 in dieser Ausgangsstellung gegen die Anschlagscheibe 66 stößt. Das Zentralventil 50 im zweiten Druckkolben 18 ist in der Ausgangsstellung ebenfalls geöffnet gehalten, indem ein mit dem Ventilkörper des Zentralventils 50 verbundener stiftförmiger Fortsatz 51 gegen die längsgeschlitzte Hülse 46 stößt. Die Schlitzbreite der Hülse 46 ist dabei so gewählt, daß der Fortsatz 51 des Ventilkörpers nicht in den Schlitz eindringen kann. Über die geöffneten Zentralventile 50 und 68 stehen die Teilkammern 22 und 20 demnach in der Ausgangsstellung in direkter Fluidverbindung mit dem oberhalb der Öffnungen 40, 42 angeordneten, nicht gezeigten Vorratsbehälter für Hydraulikflüssigkeit.

Eine auf dem ersten Druckkolben 16 angeordnete Steuerdichtung 78 steht in der Ausgangsstellung mit ihrer Dichtkante etwa auf Höhe des weiteren Ringkanals 62, so daß der Ringraum 56 in dieser Ausgangsstellung eine zusätzliche Verbindung zur Füllkammer 32 aufweist, die sich um die Steuerdichtung 78 herum und am Anschlagstift 74 vorbei durch die Öffnungen 64 erstreckt.

Es soll nun der Hauptbremszylinder 10 betätigt werden.

Hierzu ist rechts von der Füllstufe 28 üblicherweise ein in den Figuren nicht dargestellter Bremskraftverstärker angeordnet, der die beispielsweise über ein ebenfalls nicht gezeigtes Bremspedal ausgeübte Betätigungskraft verstärkt und auf den Boden 38 des tassenförmigen Bauteils 30 überträgt, womit die Füllstufe 28 und damit der gesamte Hauptbremszylinder 10 betätigt wird.

Die vom nicht gezeigten Bremskraftverstärker auf den Boden 38 des tassenförmigen Bauteils 30 übertragene Betätigungskraft verschiebt das tassenförmige Bauteil 30 und den damit starr verbundenen ersten Druckkolben 16 in Druckaufbaurichtung, d.h. in Fig. 1 nach links. Dabei schließt sich zunächst das Zentralventil 68 im ersten Druckkolben 16, ohne daß ein wesentlicher Druck in der Teilkammer 20 aufgebaut wird. Hydraulikflüssigkeit aus der Füllkammer 32 kann zu Beginn des Betätigungsvorgangs noch an der Steuerdichtung 78 vorbei und durch den Ringkanal 54 sowie die Verbindungsbohrung 52 und die Öffnung 40 zurück in den Vorratsbehälter strömen. Nach einem bestimmten Leerweg gelangt jedoch die Dichtkante der Steuerdichtung 78 in Kontakt mit einer den freien Querschnitt der Druckkammer 14 verengenden ersten Steuerkante 80 eines ringförmigen Steuernockens 82, der im Bereich des Ringraums 56 angeordnet ist, was dazu führt, daß die Verbindung von der Füllkammer 32 zum Vorrats- bzw. Ausgleichstank für Hydraulikflüssigkeit unterbrochen wird.

Im Zuge einer weiteren Verschiebung des tassenförmigen Bauteils 30 sowie des damit gekoppelten ersten Druckkolbens 16 wird nun die Hydraulikflüssigkeit aus der Füllkammer 32 durch das Zentralventil 68 im ersten Druckkolben 16, das sich aufgrund des Druckanstiegs in der Füllkammer 32 wieder öffnet, in die Teilkammer 20 gedrückt, in der es nun schnell zu einem Druckanstieg kommt, so daß auch der bisher nur wenig in Druckaufbaurichtung verschobene zweite Druckkolben 18, dessen Zentralventil 50 sich bei Beginn des Betätigungsvorgangs schließt, ebenfalls Bremsdruck aufbauen kann. Das verhältnismäßig große, aus der Füllkammer 32 in die Teilkammer 20 gedrückte Flüssigkeitsvolumen führt zu einer schnellen Überwindung des vorhandenen Bremslüftspiels.

Nach Durchlaufen eines durch den Steuernocken 82 festgelegten Betätigungsweges S überfährt die Dichtkante der Steuerdichtung 78 eine zweite, den freien Querschnitt der Druckkammer 14 wieder erweiternde Steuerkante 84, wodurch die Verbindung zwischen dem Vorratsbehälter für Hydraulikflüssigkeit und der Füllkammer 32 wieder geöffnet wird, was dazu führt, daß der Druck in der Füllkammer 32 schnell auf das Druckniveau im Vorratsbehälter sinkt. Die Füllstufe 28 ist damit außer Funktion gesetzt. Eine weitere Verschiebung des ersten Druckkolbens 16 nach links erhöht dann in üblicher Weise, d.h. ohne Unterstützung durch die Füllsture 28, den Bremsdruck in den beiden Teilkammern 20 und 22.

Es kann vorkommen, daß der von der Füllstufe 28 erzeugte Druck schon zu hoch wird, bevor die Steuerdichtung 78 die zweite Steuerkante 84 des Steuernockens 82 überfährt. Die Steuerdichtung 78 ist deshalb so gestaltet und ausgelegt, daß ihre Dichtlippe bei einem vorgegebenen Druck, der nicht überschritten werden soll, umklappt, wodurch die Steuerdichtung 78 ihre dichtende Wirkung verliert und soviel Hydraulikflüssigkeit aus der Füllkammer 32 an der Steuerdichtung 78 vorbei in den Vorratsbehälter strömen kann, bis der Druck in der Füllkammer 32 wieder unter den vorgegebenen Höchstwert gefallen ist.

Wird der Betätigungsvorgang durch Wegnahme der Betätigungskraft beendet, so bewegen sich die ersten und zweiten Druckkolben 16 und 18 aufgrund des in den Teilkammern 20 und 22 aufgebauten Drucks sowie aufgrund der durch die Rückstellfedern 70 und 72 ausgeübten Kräfte wieder zurück in die eingangs beschriebene Ausgangsstellung. Dabei vergrößert die Füllkammer 32 ihr Volumen wieder und saugt aus dem Vorratsbehälter für Hydraulikflüssigkeit durch die Öffnung 40, die Verbindungsbohrung 52, den Ringkanal 54, den Ringraum 56 und vorbei an der Steuerdichtung 78 Hydraulikflüssigkeit durch die Öffnungen 64 in der Anschlagscheibe 66 an. Dies ist jedoch nur solange möglich, bis die Steuerdichtung 78 die zweite Steuerkante 84 des Steuernockens 82 beim Rückhub überfährt, denn danach ist die Verbindung zwischen der Füllkammer 32 und dem Vorratsbehälter für Hydraulikflüssigkeit zunächst unterbrochen. Um das Entstehen eines Unterdrucks in der Füllkammer 32 zu vermeiden, ist das Rückschlagventil 60 vorgesehen. Sobald ein Unterdruck in der Füllkammer 32 beginnt sich aufzubauen, öffnet dieses federnd in Schließstellung vorgespannte Rückschlagventil 60 und stellt über die weitere Verbindungsbohrung 58 sowie den Ringkanal 54 wieder eine Verbindung zwischen dem Vorratsbehälter und der Füllkammer 32 her, so daß weitere Hydraulikflüssigkeit in die Füllkammer 32 gesaugt werden kann. Wenn die Dichtkante der Steuerdichtung 78 im Verlauf der Rückstellbewegung des ersten Druckkolbens 16 in die Ausgangsstellung die erste Steuerkante 80 des Steuernockens 82 überfahren hat, kann Hydraulikflüssigkeit wieder direkt durch den Ringraum 56 und an der Steuerdichtung 78 vorbei in die Füllkammer 32 gesaugt werden.

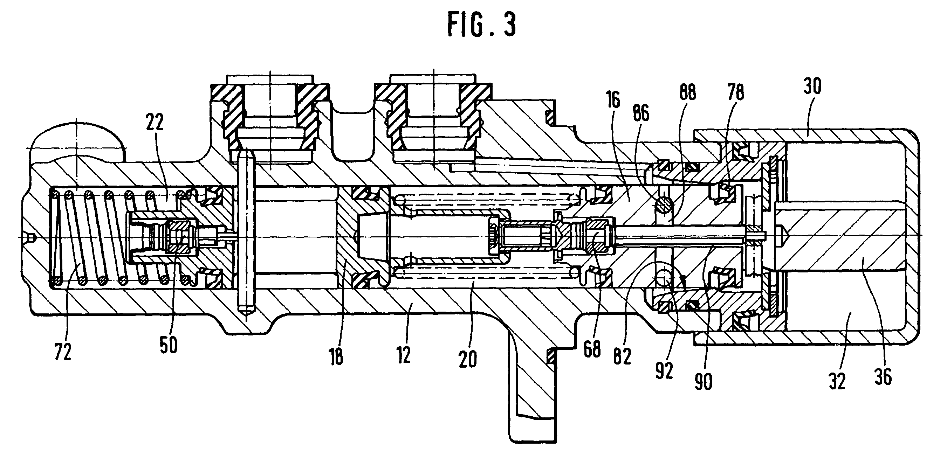

In Fig. 3 ist ein dem oben beschriebenen ersten Beispiel ähnliches zweites Beispiel, welches das Verständnis der Erfindung erleichtert, dargestellt. Es unterscheidet sich von dem ersten Beispiel im wesentlichen durch eine geänderte Geometrie des Steuernockens 82. Während die erste Steuerkante 80 ungefähr dieselbe Geometrie aufweist wie beim ersten Beispiel, schließt sich die zweite Steuerkante 84 im Unterschied zum ersten Beispiel im wesentlichen direkt an die erste Steuerkante 80 an, bewirkt jedoch in einem ersten Abschnitt zunächst nur eine langsam zunehmende Querschnittserweiterung, um dann in einem zweiten Abschnitt eine stärker zunehmende Querschnittserweiterung herbeizuführen. Auf diese Weise wird bereits kurz nach Infunktionsetzen der Füllstufe 28 ein sanfter Druckabbau und damit ein weicher Übergang zum nachfolgenden Betrieb ohne Füllstufe 28 erreicht.

Anstelle des Rückschlagventils 60 ist beim zweiten Beispiel ein schwimmendes, d.h. nicht federnd vorgespanntes Rückschlagventil 86 in einer Querbohrung 88 des ersten Druckkolbens 16 angeordnet, das während der Rückstellbewegung des Druckkolbens 16 und des tassenförmigen Bauteils 30 über eine ebenfalls im ersten Druckkolben 16 angeordnete und die Querbohrung 88 kreuzende Axialbohrung 90 eine Verbindung zwischen dem Vorratsbehälter für Hydraulikflüssigkeit und der Füllkammer 32 ermöglicht. Die Querbohrung 88 ist durch eine eingepreßte Dichtkugel 92 verschlossen, so daß das schwimmende Rückschlagventil 86 nur öffnet, wenn durch die mit dem Rückhub einhergehende Volumenvergrößerung der Füllkammer 32 ein Unterdruck bezüglich des Druckniveaus im Vorratsbehälter entsteht. Die Funktion der zweiten Ausführungsform unterscheidet sich ansonsten nicht von der ersten Ausführungsform.

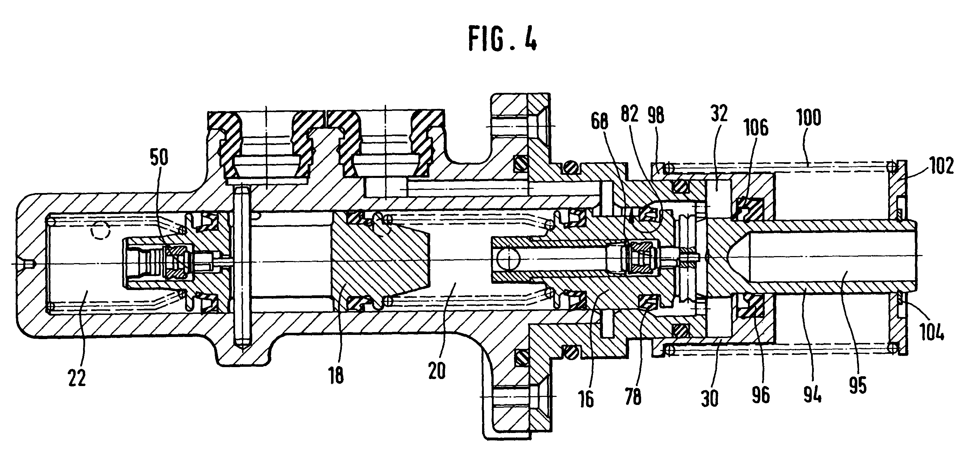

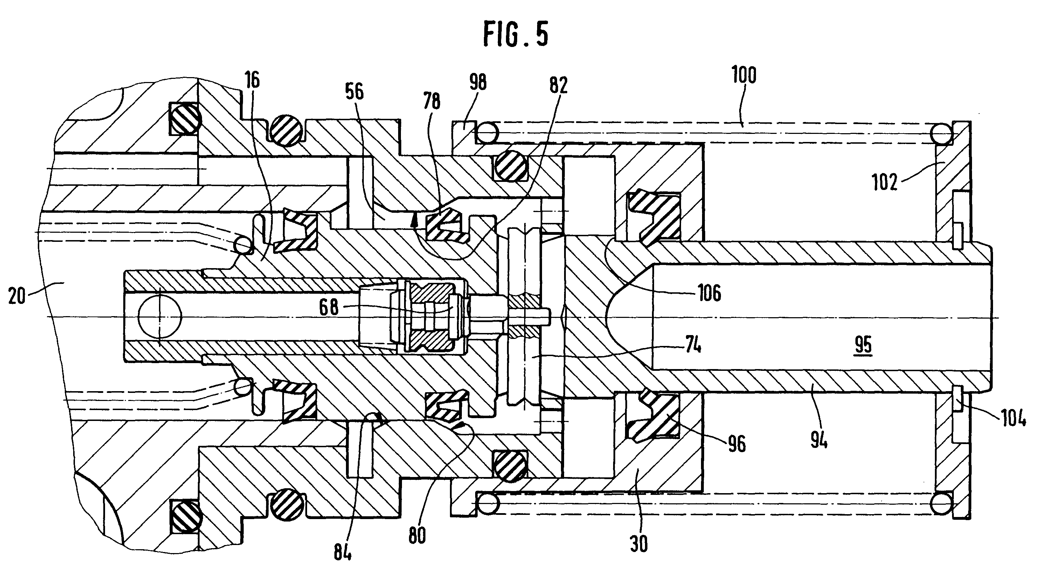

Die Figuren 4 und 5 zeigen eine erste erfindungsgemäße Ausführungsform des Hauptbremszylinders 10, die sich hauptsächlich durch die Art der Betätigung der Füllstufe 28 von den bisher beschriebenen, das Verständnis der Erfindung erleichternden Beispielen unterscheidet.

Das tassenförmige Bauteil 30 ist bei dieser ersten Ausführungsform nicht starr mit dem ersten Druckkolben 16 verbunden. Statt dessen erstreckt sich ein mit dem ersten Druckkolben 16 einstückig verbundener stabförmiger Fortsatz 94 aus der Druckkammer 14 heraus und durch das nunmehr ringförmig ausgeführte tassenförmige Bauteil 30 hindurch. Eine Lippendichtung 96 ist in einer Umfangsnut im Boden 38 des tassenförmigen Bauteils 30 angeordnet und dichtet es gegen den stabförmigen Fortsatz 94 in axial verschieblicher Weise ab. An dem dem Hauptbremszylinder 10 zugewandten Ende des tassenförmigen Bauteils 30 ist ein rechtwinklig zur Achse A nach außen ragender Kragen 98 ausgebildet, der ein Ende einer radial außerhalb des tassenförmigen Bauteils 30 angeordneten schraubenförmigen Betätigungsfeder 100 abstützt. Das andere Ende der Betätigungsfeder 100 wird von einem auf dem stabförmigen Fortsatz 94 angeordneten Ring 102 abgestützt, der mittels eines Sicherungsrings 104 gegen eine Axialverschiebung in Fig. 4 nach rechts festgehalten ist.

Eine Betätigung des Hauptbremszylinders 10 gemäß der ersten Ausführungsform erfolgt durch Einleiten einer Betätigungskraft in den stabförmigen Fortsatz 94, beispielsweise mit einer nicht gezeigten Betätigungsstange, die in eine Ausnehmung 95 im stabförmigen Fortsatz 94 eingreift. Das bedeutet, daß die Füllstufe 28 in dieser Ausführungsform nurmehr indirekt durch die Betätigungsfeder 100 betätigt wird. Daraus ergibt sich der Vorteil einer federkraftproportionalen Fülldruckbegrenzung, wodurch wegabhängige Toleranzen den von der Füllstufe 28 erzeugten Fülldruck nicht mehr beeinflussen können. Wird ein durch die Wahl der Betätigungsfeder 100 vorgegebener Fülldruck erreicht, der die Federkraft überschreitet, so bleibt das tassenförmige Bauteil 30 stehen und nur der erste Druckkolben 16 sowie der zweite Druckkolben 18 verschieben sich weiter in Druckaufbaurichtung.

Die federkraftproportionale Fülldruckbegrenzung der ersten Ausführungsform ermöglicht es die Steuerdichtung 78 gegenüber den ersten beiden Beispielen umgedreht einzusetzen, so daß die Dichtlippe der Steuerdichtung 78 nicht mehr bei einem Überdruck in der Füllkammer 32, sondern bei einem darin auftretenden Unterdruck ihre dichtende Wirkung verliert und Hydraulikflüssigkeit an der Steuerdichtung 78 vorbei in die Füllkammer 32 strömen kann. Das Rückschlagventil 60 bzw. das Rückschlagventil 86 der ersten bzw. der zweiten Ausführungsform kann daher entfallen.

Ein am ersten Druckkolben 16 ausgebildeter Vorsprung 106 sorgt dafür, daß beim Rückhub des ersten Druckkolbens 16 durch eine formschlüssige Mitnahme auch das tassenförmige Bauteil 30 zurück in die Ausgangsstellung bewegt wird.

Gegenüber den ersten beiden Beispielen ist das Gehäuse 12 des Hauptbremszylinders 10 bei der dritten Ausführungsform zweiteilig ausgeführt. Das ermöglicht es, den in Fig. 4 linken Teil des Gehäuses 12 im wesentlichen von einem herkömmlichen Hauptzylinder zu übernehmen, so daß nur der in Fig. 4 rechte Abschnitt des Gehäuses 12 anders auszuführen ist. Die Zweiteiligkeit des Gehäuses 12 bietet ferner herstellungstechnische Vorteile und gestattet eine einfachere Montage.

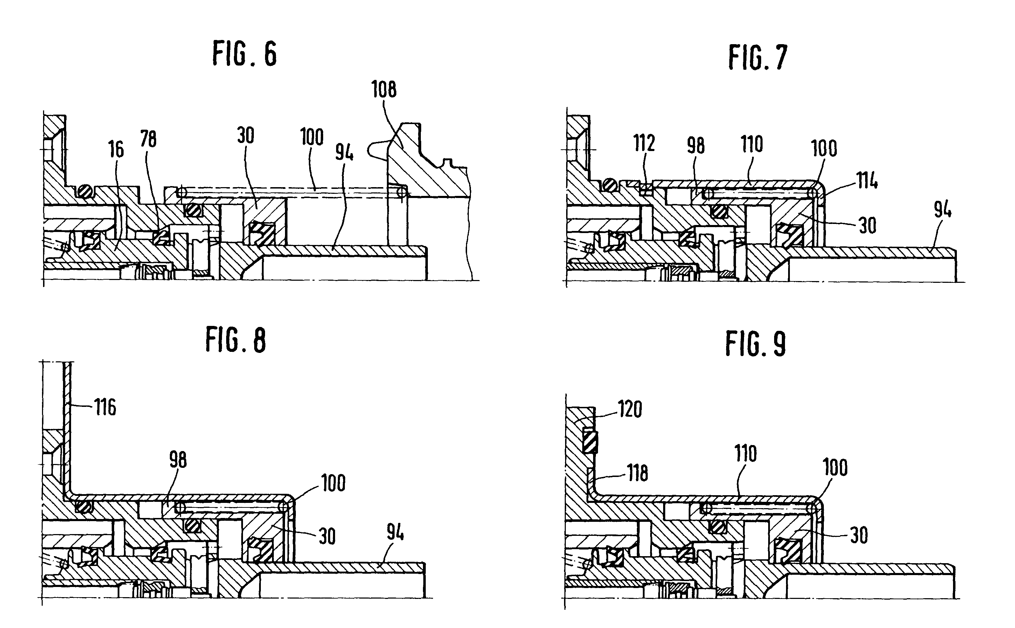

In Fig. 6 bis Fig. 9 sind Ausführungsformen dargestellt, bei denen die Füllstufe 28 gegenüber der bisher beschriebenen Ausführungsform vom Betätigungsorgan, z. B. einem nicht gezeigten Bremspedal eines Fahrzeugs, vollständig entkoppelt sind. Die für eine Betätigung der Füllstufe 28 erforderliche Betätigungskraft hat deshalb im Bremspedal keine spürbare Rückwirkung mehr.

Bei der Zweiten Ausführungsform gemäß Fig. 6 ist dies dadurch erreicht, daß sich die Betätigungsfeder 100 direkt am Steuergehäuse 108 des nicht gezeigten Bremskraftverstärkers abstützt. Die für die Füllstufe 28 erforderliche Betätigungskraft wird somit vollkommen vom Bremskraftverstärker übernommen und ist am Bremspedal nicht spürbar.

Bei einer dritten Ausführungsform ist gemäß Fig. 7 die Betätigungsfeder 100 von einem Federkäfig 110 umfangen, gegen den sich das eine Ende der Betätigungsfeder 100 abstützt. Der Federkäfig 110 ist auf dem betätigungsseitigen Ende des Gehäuses 12 des Hauptbremszylinders 10 durch eine Verstemmung in eine Umfangsnut 112 axial fixiert. Ein ringförmiger Boden 114 des Federkäfigs 110 ragt radial soweit nach innen, daß er nicht nur die Betätigungsfeder 100 abstützen kann, sondern zusätzlich auch noch die axiale Verschiebung des tassenförmigen Bauteils 30 nach rechts, d.h. entgegen der Druckaufbaurichtung, begrenzen kann. Dies ist vor allem notwendig, wenn eine Bremsanlage, in der der Hauptbremszylinder 10 Verwendung findet, nach der Montage oder im Rahmen von Wartungsarbeiten druckbefüllt wird. Bei einer Druckbefüllung wird zunächst die Bremsanlage evakuiert und anschließend das gesamte System mit unter Druck stehender Hydraulikflüssigkeit befüllt. Dabei kann sich das tassenförmige Bauteil 30 so weit nach rechts verschieben, daß ein axialer Anschlag notwendig wird.

Bei der vierten Ausführungsform gemäß Fig. 8 ist im Unterschied zur drillen Ausführungsform kein separater, die Betätigungsfeder 100 umfangender Federkäfig 110 vorgesehen. Dessen Funktion übernimmt stattdessen die Außenwand 116 eines nicht weiter gezeigten Bremskraftverstärkers.

In einer fünften Ausführungsform gemäß Fig. 9 ist der die Betätigungsfeder 100 umfangende Federkäfig 110 so ausgebildet, daß er einen flanschförmigen Endabschnitt 118 aufweist, welcher sich parallel zu einem Flansch 120 des Gehäuses 12 des Hauptbremszylinders 10 erstreckt. Beim Zusammenbau des Hauptbremszylinders 10 wird der so ausgebildete Federkäfig 110 auf das betätigungsseitige Ende des Hauptbremszylindergehäuses 12 aufgeschoben und anschließend gegen die Außenwand eines zugeordneten Bremskraftverstärkers gedrückt, an dem der Hauptbremszylinder 10 zu befestigen ist. Nach einer Montage des Hauptbremszylinders am Bremskraftverstärker ist der Federkäfig 110 der siebten Ausführungsform somit axial starr fixiert.

Die Funktion der zweiten bis fünften Ausführungsform ist analog der Funktion der ersten Ausführungsform, d.h. auch der Hauptbremszylinder 10 der zweiten bis fünften Ausführungsform weist eine federkraftproportionale Fülldruckbegrenzung der Füllstufe 28 auf.

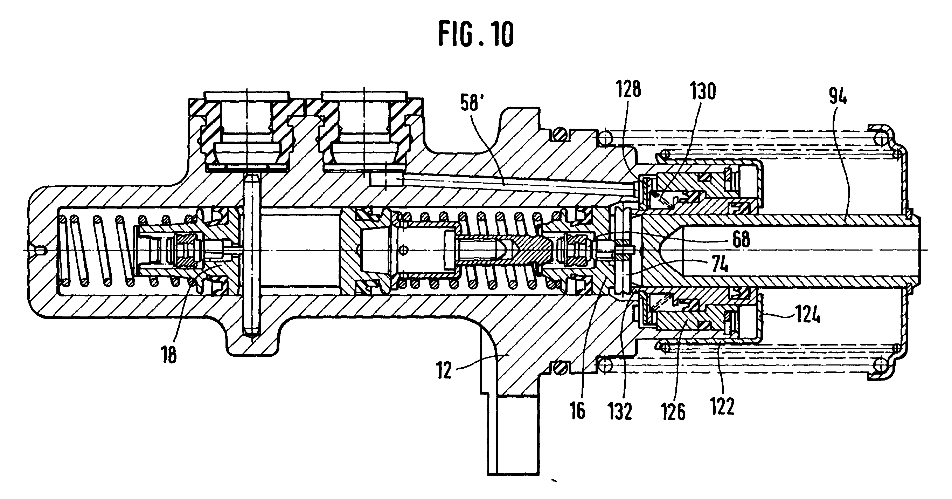

Eine sechste Ausführungsform des Hauptbremszylinders 10 ist in Fig. 10 dargestellt. Das analog zur ersten bis fünften Ausführungsform ebenfalls federbetätigte tassenförmige Bauteil 30 ist im Unterschied zu den vorgenannten Ausführungsformen mehrteilig ausgeführt. Es besteht aus einem auf dem betätigungsseitigen Ende des Hauptbremszylindergehäuses 12 geführten Betätigungskäfig 122, dessen radial nach innen ragender Boden 124 einen um den stabförmigen Fortsatz 94 axial verschieblich und abdichtend geführten ringförmigen Füllkolben 126 in Druckaufbaurichtung verschieben kann. Am druckseitigen Ende des Füllkolbens 126 ist ein Plattenventil 128 angeordnet, das sich über eine Feder 130 gegen den Füllkolben 126 abstützt und das bei einer Betätigung des Hauptbremszylinders 10 nach einem definierten Leerweg die Verbindungsbohrung 58' zum Vorratsbehälter für Hydraulikflüssigkeit verschließt. Auch bei dieser Ausführungsform kommt die federkraftproportionale Druckbegrenzung der Füllstufe 28 zum tragen: Wird ein vorgegebener Druck erreicht, der die Betätigungsfederkraft übersteigt, so bewegt sich der Füllkolben 126 nicht weiter in Druckaufbaurichtung.

Der Füllkolben 126 weist druckseitig zusätzlich einen ringförmigen Fortsatz 132 auf, welcher in der Lage ist, durch einen Kontakt mit dem Anschlagstift 74 das Zentralventil 68 im ersten Druckkolben 16 bis zum Erreichen eines vorgegebenen Drucks offen zu halten.

## Patentansprüche

1. Hauptbremszylinder (10) für eine hydraulische Bremsanlage, mit einem sich im wesentlichen längs einer Achse (A) erstreckenden Gehäuse (12), das zumindest eine darin ausgebildete Druckkammer (14) hat, welche an der Betätigungsseite des Hauptbremszylinders (10) eine Öffnung aufweist, und einer Füllstufe (28), die einen koaxial zur Achse (A) geführten, die Druckkammer (14) abdichtenden Füllkolben und eine Füllkammer aufweist und die in der Anfangsphase einer Betätigung des Hauptbremszylinders (10) die Bremsanlage bei relativ kurzem Betätigungsweg schnell mit Hydraulikflüssigkeit auffüllt, wobei der Füllkolben und die Füllkammer (32) durch ein tassenförmiges Bauteil (30) gebildet sind, dadurch gekennzeichnet, daß
das tassenförmige Bauteil (30) auf dem betätigungsseitigen Ende des Hauptbremszylindergehäuses (12) teleskopisch geführt ist und während der Betätigung des Hauptbremszylinders (10) durch ein federnd nachgiebiges Element (100) in Druckaufbaurichtung verschoben wird.

2. Hauptbremszylinder nach Anspruch 1,
dadurch gekennzeichnet, daß
das tassenförmige Bauteil (30) mechanisch mit einem Druckkolben (16) des Hauptbremszylinders (10) verbunden ist.

3. Hauptbremszylinder nach Anspruch 2,
dadurch gekennzeichnet, daß
die Funktion der Füllstufe (28) betätigungswegabhängig gesteuert ist.

4. Hauptbremszylinder nach Anspruch 3,
dadurch gekennzeichnet, daß
in der Druckkammer (14) ein sich in Umfangsrichtung erstreckender Steuernocken (82) angeordnet ist, der während einer Betätigung des Hauptzylinders (10) mit einer ebenfalls in der Druckkammer (14) angeordneten, sich in Umfangsrichtung erstreckenden Steuerdichtung (78) derart zusammenwirkt, daß die Füllstufe (28) bei Erreichen eines vorgegebenen Betätigungsweges außer Funktion gesetzt wird.

5. Hauptbremszylinder nach Anspruch 4,
dadurch gekennzeichnet, daß
die Steuerdichtung (78) so ausgelegt ist, daß sie bei Erreichen eines vorgegebenen Füllstufendrucks ihre dichtende Wirkung verliert.

6. Hauptbremszylinder nach Anspruch 4 oder 5,
dadurch gekennzeichnet, daß
die Steuerdichtung (78) auf dem Druckkolben (16) angeordnet ist.

7. Hauptbremszylinder nach einem der Ansprüche 1 bis 6,
dadurch gekennzeichnet, daß
das federnd nachgiebige Element eine Betätigungsfeder (100) ist.

8. Hauptbremszylinder nach einem der Ansprüche 1 bis 7,
dadurch gekennzeichnet, daß
das tassenförmige Bauteil (30) mit einem Druckkolben (16) des Hauptbremszylinders (10) mechanisch verbunden ist und während seiner Verschiebung in Druckaufbaurichtung von dem Druckkolben (16) des Hauptbremszylinders (10) entkoppelt ist.

9. Hauptbremszylinder nach Anspruch 8,
dadurch gekennzeichnet, daß
das federnd nachgiebige Element radial außerhalb des tassenförmigen Bauteils (30) angeordnet und von einem Käfig (110) umfangen ist, gegen den sich ein Ende des federnd nachgiebigen Elements in Axialrichtung abstützt.

10. Hauptbremszylinder nach Anspruch 9,
dadurch gekennzeichnet, daß
der Käfig (110) auf dem betätigungsseitigen Ende des Hauptbremszylindergehäuses (12) axial fixiert ist.

11. Hauptbremszylinder nach Anspruch 9,
dadurch gekennzeichnet, daß
der Käfig durch die Außenwand (116) eines Bremskraftverstärkergehäuses gebildet ist.

12. Hauptbremszylinder nach Anspruch 9,
dadurch gekennzeichnet, daß
der Käfig (110) an seinem der Betätigungsseite entgegengesetzten Ende einen flanschförmigen Endabschnitt (118) aufweist, der sich axial gegen das Gehäuse (12) des Hauptbremszylinders (10) abstützt.

13. Hauptbremszylinder nach Anspruch 1 oder 2,
dadurch gekennzeichnet, daß
eine Axialverschiebung des tassenförmigen Bauteils (30) ein Plattenventil (128) steuert, welches eine Verbindung zwischen der Füllkammer (32) und einem Vorratsbehälter für Hydraulikfluid bei einer Verschiebung des tassenförmigen Bauteils (30) in Druckaufbaurichtung unterbricht.

14. Hauptbremszylinder nach einem der Ansprüche 1 bis 13,
dadurch gekennzeichnet, daß
ein Druckkolben (16) des Hauptbremszylinders (10) mit dem tassenförmigen Bauteil (30) mechanisch verbunden ist und das tassenförmige Bauteil (30) abdichtend durchsetzt und zu diesem axial verschieblich ist.

15. Hauptbremszylinder nach einem der Ansprüche 1 bis 14,
dadurch gekennzeichnet, daß
das Gehäuse (12) des Hauptbremszylinders (10) in Querrichtung geteilt ist.

## Claims

1. A master cylinder (10) for a hydraulic braking system with a housing (12) extending essentially along an axis (A) and comprising at least one pressure chamber (14) formed therein which is provided with an opening on the actuation side of the master cylinder (10),
and a quickfill stage (28) comprising a quickfill piston being guided coaxially with the axis (A) and sealing the pressure chamber (14) and a quickfill chamber, and which in the initial phase of an actuation of the master cylinder (10) rapidly fills the brake system with hydraulic fluid upon a relatively short actuation travel, the quickfill piston and the quickfill chamber (32) being formed by a cup-shaped component (30),
characterised in that the cup-shaped component (30) is telescopically guided on the actuation end of the master cylinder housing (12) and is moved in the direction of pressure build-up by a resilient element (100) during actuation of the master cylinder (10).

2. A master brake cylinder according to Claim 1,
characterised in that the cup shaped component (30) is mechanically connected with a pressure piston (16) of the master cylinder (10).

3. A master brake cylinder according to Claim 2,
characterised in that the operation of the quickfill stage (28) is controlled as a function of the actuation travel.

4. A master brake cylinder according to Claim 3,
characterised in that a control cam (82) extending in a circumferential direction is arranged in the pressure chamber (14) which during an actuation of the master brake cylinder (10) cooperates in such a manner with a control seal (78) which is also arranged in the pressure chamber (14) and extends in a circumferential direction that the quickfill stage (28) is deactivated upon reaching a predetermined actuation travel.

5. A master brake cylinder according to Claim 4,
characterised in that the control seal (78) is so designed that it loses its sealing capacity upon reaching a predetermined quickfill stage pressure.

6. A master brake cylinder according to Claim 4 or 5,
characterised in that the control seal (78) is arranged on the pressure piston (16).

7. A master brake cylinder according to one of Claims 1 to 6,
characterised in that the resilient element is an actuating spring (100).

8. A master brake cylinder according to one of Claims 1 to 7,
characterised in that the cup shaped component (30) is mechanically connected with a pressure piston (16) of the master cylinder (10) and, during its displacement in the direction of pressure buildup, is uncoupled from the pressure piston (16) of the master cylinder (10).

9. A master brake cylinder according to Claim 8,
characterised in that the resilient element is arranged radially outside the cup-shaped component (30) and surrounded by a cage (110) against which one end of the resilient element bears in the axial direction.

10. A master brake cylinder according to Claim 9,
characterised in that the cage (110) is axially secured on the actuation end of the master cylinder housing (12).

11. A master brake cylinder according to Claim 9,
characterised in that the cage is formed by the outer wall (116) of a brake booster housing.

12. A master brake cylinder according to Claim 9,
characterised in that the cage (110) comprises at its end opposite the actuation end a flange-shaped end section (118) which bears axially against the housing (12) of the master cylinder (10).

13. A master brake cylinder according to Claim 1 or 2,
characterised in that an axial displacement of the cup-shaped component (30) controls a plate valve (128) which interrupts a connection between the quickfill chamber (32) and a reservoir for hydraulic fluid upon a displacement of the cup-shaped component (30) in the direction of pressure buildup.

14. A master brake cylinder according to one of Claims 1 to 13,
characterised in that a pressure piston (16) of the master cylinder (10) is mechanically connected with the cup shaped component (30), sealingly penetrates the cup shaped component (30) and is axially movable relative to it.

15. A master brake cylinder according to one of Claims 1 to 14,
characterised in that the housing (12) of the master cylinder (10) is split in the transverse direction.

## Revendications

1. Maître cylindre de freins (10) pour un système de freinage hydraulique, comprenant un boîtier (12) s'étendant essentiellement suivant un axe (A), possédant au moins une chambre de pression (14) formée intérieurement qui présente du côté de l'actionnement du maître cylindre de freins (10) une ouverture, et présentant un étage de remplissage (28) qui présente un piston de remplissage guidé de façon coaxiale à l'axe (A) fermant de façon étanche la chambre de pression (14) et une chambre de remplissage et qui remplit rapidement dans la phase initiale d'un actionnement du maître cylindre de freins (10) le système de freinage de liquide hydraulique avec une course d'actionnement relativement courte, le piston de remplissage et la chambre de remplissage (32) étant formés par une pièce constitutive en forme de tasse (30), caractérisé en ce que la pièce constitutive en forme de tasse (30) est guidée de façon télescopique sur l'extrémité située du côté de l'actionnement du boîtier de maître cylindre de freins (12) et est poussée pendant l'actionnement du maître cylindre de freins (10) par un élément élastique flexible (100) dans la direction de la montée de pression.

2. Maître cylindre de freins selon la revendication 1,
caractérisé en ce que
la pièce constitutive en forme de tasse (30) est reliée mécaniquement à un piston de pression (16) du maître cylindre de freins (10).

3. Maître cylindre de freins selon la revendication 2
caractérisé en ce que
le fonctionnement de l'étage de remplissage (28) est commandé en fonction de la course d'actionnement.

4. Maître cylindre de freins selon la revendication 3
caractérisé en ce que
une came de commande (82) s'étendant périphériquement est disposée dans la chambre de pression (14), qui coopère pendant un actionnement du maître cylindre (10) avec une garniture d'étanchéité de commande (78) s'étendant périphériquement, également disposée dans la chambre de pression (14), de telle façon que l'étage de remplissage (28) soit mis hors service lorsqu'une course d'actionnement donnée à l'avance est atteinte.

5. Maître cylindre de freins selon la revendication 4,
caractérisé en ce que
la garniture d'étanchéité de commande (78) est conçue de telle façon qu'elle perde son effet de fermeture étanche lorsqu'une course d'actionnement donnée à l'avance est atteinte.

6. Maître cylindre de freins selon la revendication 4 ou 5,
caractérisé en ce que
la garniture d'étanchéité de commande (78) est disposée sur le piston de pression (16).

7. Maître cylindre de freins selon l'une quelconque des revendications 1 à 6,
caractérisé en ce que
l'élément élastique flexible est un ressort d'actionnement (100).

8. Maître cylindre de freins selon l'une quelconque des revendications 1 à 7,
caractérisé en ce que
la pièce constitutive en forme de tasse (30) est reliée mécaniquement à un piston de pression (16) du maître cylindre de freins (10) et est désaccouplée du piston de pression (16) du maître cylindre de freins (10) pendant son coulissement dans la direction de la montée de pression.

9. Maître cylindre de freins selon la revendication 8,
caractérisé en ce que
l'élément élastique flexible est disposé radialement à l'extérieur de la pièce constitutive en forme de tasse (30) et est entouré d'une cage (110), contre laquelle une extrémité de l'élément élastique flexible s'appuie dans la direction axiale.

10. Maître cylindre de freins selon la revendication 9
caractérisé en ce que
la cage (110) est fixée axialement sur l'extrémité située du côté de l'actionnement du boîtier (12) du maître cylindre de freins.

11. Maître cylindre de freins selon la revendication 9
caractérisé en ce que
la cage est formée par la paroi extérieure (116) d'un boîtier de servofrein.

12. Maître cylindre de freins selon la revendication 9
caractérisé en ce que
la cage (110) présente à son extrémité opposée au côté de l'actionnement une portion finale en forme de bride (118) qui s'appuie axialement contre le boîtier (12) du maître cylindre de freins (10).

13. Maître cylindre de freins selon la revendication 1 ou 2,
caractérisé en ce que
un coulissement axial de la pièce constitutive en forme de tasse (30) commande un clapet à disque (128) qui interrompt une communication entre la chambre de remplissage (32) et un réservoir de fluide de hydraulique lors d'un coulissement de la pièce constitutive en forme de tasse (30) dans la direction de la montée de pression.

14. Maître cylindre de freins selon l'une quelconque des revendications 1 à 13,
caractérisé en ce que
un piston de pression (16) du maître cylindre de freins (10) est relié mécaniquement à la pièce constitutive en forme de tasse (30) et traverse de façon étanche la pièce constitutive en forme de tasse (30) et peut coulisser axialement par rapport à celle-ci.

15. Maître cylindre de freins selon l'une quelconque des revendications 1 à 14
caractérisé en ce que
le boîtier (12) du maître cylindre de freins (10) est subdivisé dans la direction transversale.
